# DEMANDE DE BREVET EUROPEEN

(11) **EP 1 471 283 A2**
(43) Date de publication de la demande: **27.10.2004**
(21) Numéro de dépôt: 04300209.6
(22) Date de dépôt: 19.04.2004
(51) Int. Cl.: F16H 3/093

(54) **Boîte de vitesses compacte à deux embrayages et a deux arbres secondaires**

(30) Priorité: 24.04.2003 FR 0305025
(71) Demandeur: Renault s.a.s., 92100 Boulogne Billancourt (FR)
(72) Inventeur: Raoul, Michel, 78990 Elancourt (FR)

(57) **Abrégé**

Boîte de vitesses (10) à arbres parallèles et à engrenages comportant un arbre primaire plein (20) et un arbre primaire creux (30) concentriques portant chacun au moins deux dentures fixes (21, 22) et (31, 32), ainsi que deux arbres secondaires (50, 60) portant des pignons fous (81, 82, 83, 84, 85, 86, 87) caractérisée en ce que le premier arbre secondaire (50) est muni d'un pignon d'attaque (51) d'une couronne de pont (70) et en ce que le deuxième arbre secondaire (60) est relié à la couronne de pont (70) par l'intermédiaire d'un organe flexible (75)

## Description

L'invention concerne une boîte de vitesses de véhicule automobile.

Elle concerne plus particulièrement une boîte de vitesses à arbres parallèles et à engrenages comportant un arbre primaire plein et un arbre primaire creux concentriques portant chacun au moins deux dentures fixes, ainsi que deux arbres secondaires.

Par la publication FR 2 802 600, on connaît une boîte de vitesses à deux embrayages qui peuvent être actionnés simultanément, en passant par un état où ils transmettent tous les deux le couple pour permettre les changements de rapports sans discontinuité du couple transmis aux roues du véhicule.

Selon cette publication, les pignons fixes des rapports impairs sont portés par l'arbre primaire plein et les pignons fixes des rapports pairs sont portés par l'arbre primaire creux. Par ailleurs, les embrayages d'entrée habituellement associés à ce type d'architecture sont des embrayages dits «humides» nécessitant un distributeur hydraulique et une pompe à huile.

Ces dispositions posent un problème global d'encombrement axial de la boîte.

Pour remédier à cet inconvénient, l'invention propose que le premier arbre secondaire soit muni d'un pignon d'attaque d'une couronne de pont et que le deuxième arbre secondaire soit relié à la couronne de pont par l'intermédiaire d'un organe flexible.

Selon un mode de réalisation préféré de l'invention, l'organe flexible est une chaîne.

De façon avantageuse, cette chaîne relie alors deux roues dentées portées respectivement par le premier et par le deuxième arbre secondaire.

Cette disposition permet de faire varier le rapport de démultiplication entre les arbres secondaires indépendamment de la démultiplication du pignon d'attaque de l'arbre secondaire principal avec la couronne de pont, dont la dimension peut également être adaptée en fonction des rapports souhaités.

Un autre inconvénient de l'architecture connue réside dans ses faibles possibilités d'adaptation aux motorisations associées, notamment pour obtenir une démultiplication importante sur le rapport de première et pour obtenir une démultiplication du rapport de marche arrière cohérente avec celle du rapport de première.

Pour résoudre ce problème, l'invention prévoit que l'arbre primaire plein porte deux dentures fixes engrenant respectivement avec un seul pignon porté par l'arbre secondaire, et avec deux pignons fous portés par les arbres secondaires.

Elle prévoit également que l'arbre primaire creux porte deux dentures fixes engrenant respectivement avec deux pignons fous portés respectivement par les arbres secondaires, et avec un pignon fou porté par l'arbre secondaire et un pignon fixe porté par un axe intermédiaire.

Enfin, l'architecture connue présente l'inconvénient que l'un des arbres secondaire se situe en bas de la boîte, et que les pignons, en barbotant dans l'huile créent des émulsions d'huile qui risquent, perturber gravement le fonctionnement de la pompe à huile et du distributeur hydraulique associés aux embrayages humides.

Pour remédier à cet inconvénient, l'invention prévoit que le premier arbre secondaire soit disposé au-dessus du plan défini par les axes respectifs des arbres primaires et de la couronne du pont, et que les deux arbres secondaires soient symétriques par rapport à l'axe des arbres primaires.

D'autres caractéristiques et avantages de l'invention apparaîtront à la lecture de la description suivante d'un mode de réalisation particulier de celle-ci, en se référant aux dessins annexés sur lesquels ;

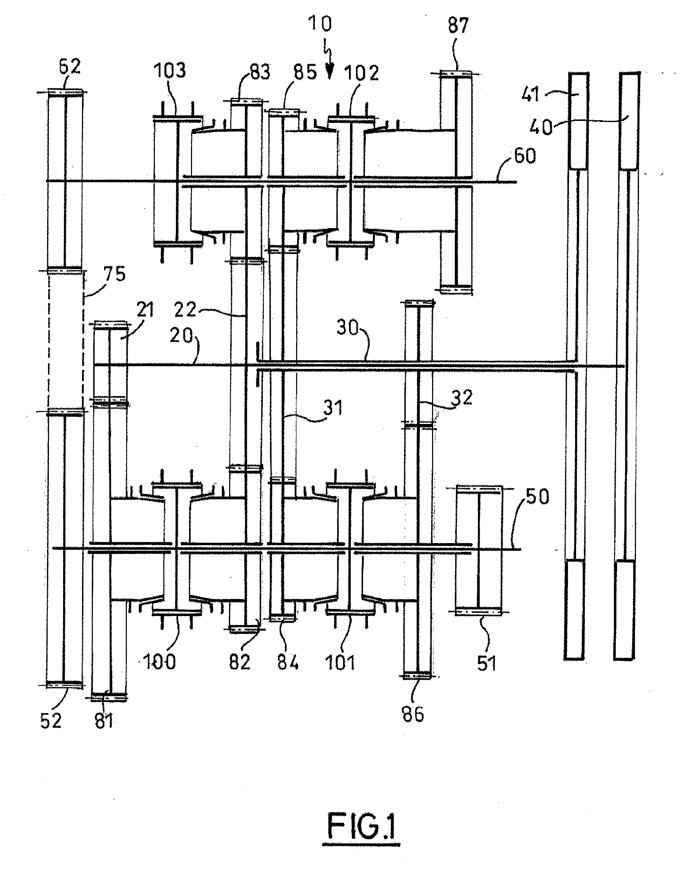

- la figure 1 est un schéma rabattant dans un même plan les arbres primaires et secondaires,
- la figure 2 est un schéma montrant en plus par l'axe de marche arrière,
- la figure 3 met en évidence le cheminement du couple selon le rapport de marche arrière,
- la figure 4 met en évidence le cheminement du couple selon le rapport de première,
- la figure 5 met en évidence le cheminement du couple selon le rapport de deuxième,
- la figure 6 met en évidence le cheminement du couple selon le rapport de troisième,
- la figure 7 met en, évidence le cheminement du couple selon le rapport de quatrième,
- la figure 8 met en évidence le cheminement du couple selon le rapport de cinquième, et
- la figure 9 met en évidence le cheminement du couple selon le rapport de sixième.

De manière connue, la boîte de vitesses 10 comporte un premier arbre primaire plein 20 qui est coaxial à un second arbre primaire creux 30. Les arbres 20, 30 sont entraînés par un moteur respectivement par l'intermédiaire d'un premier embrayage 40 et d'un second embrayage 41, par exemple des embrayages multidisques humides.

La boîte de vitesses comporte aussi un premier arbre secondaire 50, dit principal, et un deuxième arbre secondaire 60, dit auxiliaire.

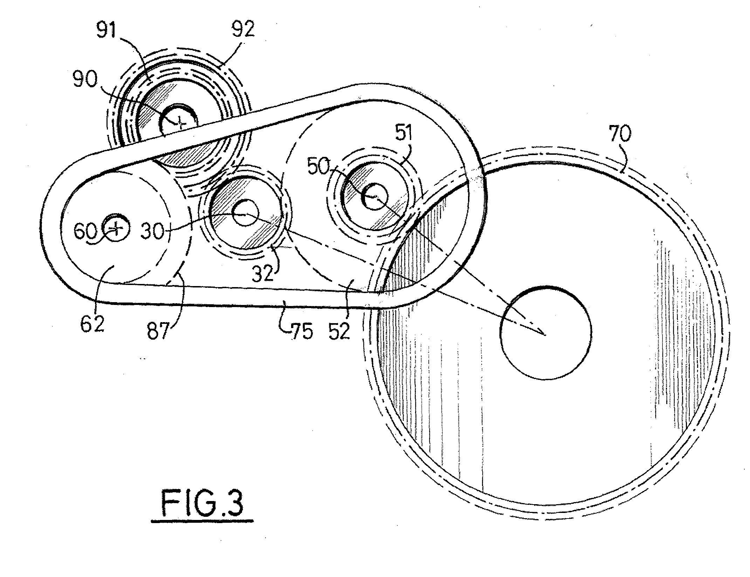

Comme le montre la figure 3, le premier arbre secondaire 50 est disposé au-dessus du plan défini par les axes respectifs des arbres primaires 20, 30 et de la couronne du pont 70. Par ailleurs, ces deux arbres sont disposés symétriquement par rapport aux arbres primaires 20 et 30

Des engrenages sont disposés entre les arbres primaires 20 et 30 et les arbres secondaires 50 et 60, de manière à transmettre le couple du véhicule à un couronne 70 (représentée sur les figures 3 à 9) d'un pont (non représenté) entraînant les roues d'un véhicule.

Conformément à l'invention, seul l'arbre secondaire principal 50 comporte un pignon d'attaque 51 qui engrène avec la couronne 70 du pont. L'arbre secondaire auxiliaire 60 est lié en rotation à l'arbre secondaire 50 par une chaîne 75 et des roues dentées 52 et 62 portées respectivement par les arbres secondaires 50 et 60.

Les engrenages sont constitués de dentures fixes qui sont portées par le premier et par le second arbre primaire 20, 30, et qui engrènent avec des pignons fous portés par les arbres secondaires 50 et 60. Les pignons fous sont sélectivement liés en rotation aux premier et second arbre secondaire 50 et 60 par des moyens de crabotage permettant d'obtenir au moins deux rapports de marche avant et un rapport de marche arrière. Les deux embrayages 40 et 41 peuvent être actionnés alternativement, en passant par un état où ils transmettent tous les deux le couple par glissement de l'un d'eux, pour permettre au moins un changement de rapport sans discontinuité de couple transmis aux roues.

Le premier arbre primaire 20 porte deux dentures fixes 21, 22. La première engrène avec un unique pignon fou 81, porté par le premier arbre secondaire 50, pour constituer le rapport de première. La seconde engrène avec deux pignons fous 82 et 83, respectivement portés par le premier arbre secondaire 50 pour constituer le rapport de cinquième et par le second arbre secondaire 60 pour constituer le rapport de troisième.

Le second arbre primaire creux 30 porte également deux dentures fixes 31, 32. La première engrène avec deux pignons fous 84 et 85, respectivement portés par le premier arbre secondaire 50 pour constituer le rapport de sixième et par le second arbre secondaire 60 pour constituer le rapport de quatrième. La seconde engrène avec un pignon fou 86 porté par le premier arbre secondaire 50 pour constituer le rapport de deuxième.

Le rapport de marche arrière a son propre pignon fou 87, porté par le second arbre secondaire 60, qui engrène avec un pignon intermédiaire 91, porté par un arbre intermédiaire 90, lié en rotation avec le second pignon intermédiaire 92 qui engrène avec la denture fixe 32 de l'arbre primaire 30.

L'ensemble des six rapports avant et le rapport de marche arrière sont ainsi obtenus avec seulement deux dentures fixes 21 et 22 sur le premier arbre primaire plein 20 pour obtenir les rapports impairs et avec deux dentures fixes 31 et 32 sur le second arbre primaire creux 30 pour obtenir les rapports pairs et le rapport de marche arrière.

Les dentures fixes 22, 31, et 32 engrènent avec deux pignons chacun, le premier avec les pignons fous 82 et 83, le second avec les pignons fous 84 et 85, le troisième avec le pignon fou 86 et le pignon intermédiaire de marche arrière 92.

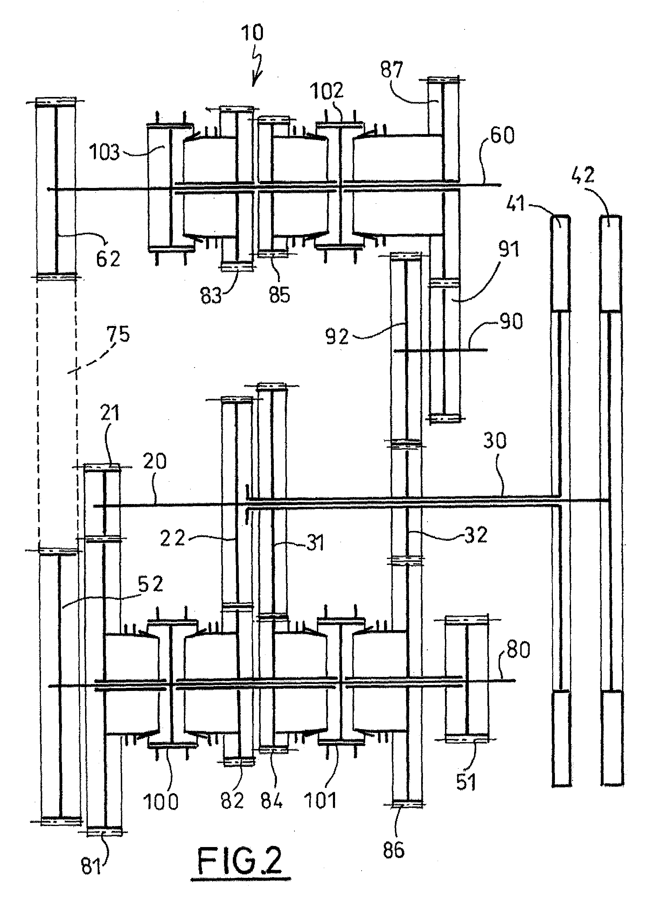

La figure 2 montre que le pignon fou de marche arrière 87 et le pignon intermédiaire de marche arrière 91 sont disposés dans la même tranche axiale que le pignon d'attaque 51, de sorte que l'encombrement axial de ces deux pignons ne dépasse pas celui du pignon d'attaque 51 de la couronne 70.

Cette disposition permet de rendre la boîte de vitesses proposée par l'invention particulièrement compacte, puisque l'encombrement nécessaire pour obtenir six rapports de marche avant et un rapport de marche arrière correspond à celui d'une boîte à quatre rapports.

Les distances entre les axes des arbres primaires 20 et 30 et le premier arbre secondaire 50 d'une part, et les axes des arbres primaires 20 et 30 et le second arbre secondaire 60 d'autre part, peuvent être différentes. Toutefois, en choisissant le même écartement, on peut également adopter des pignons fous et des dispositifs de crabotage identiques.

Pour obtenir des rapports différents à partir d'une denture fixe qui engrène avec deux pignons fous identiques, les roues dentées 52 et 62 des deux arbres secondaires 50 et 60 ont un rapport de nombre de dents approprié. Ainsi, pour obtenir les rapports de cinquième et de troisième à partir de la même denture fixe 22 et avec des pignons fous identiques 82 et 83, le nombre de dents de la roue dentée 62 de l'arbre secondaire 60 (qui porte le pignon fou 83 de troisième) est sensiblement inférieur à celui de la roue dentée 52 de l'arbre secondaire 50 (qui porte le pignon fou 82 de cinquième).

Il en est de même pour obtenir les rapports de sixième et de quatrième à partir de la même denture fixe 31 et avec des pignons fous identiques 84 et 85.

Enfin, l'invention propose que les ratios entre les démultiplications de troisième sur quatrième, de quatrième sur cinquième et de cinquième sur sixième soient identiques ou sensiblement identiques. Cette disposition permet d'obtenir un étagement satisfaisant des rapports de troisième à sixième

Les premier et second embrayages 40 et 41 permettent de lier sélectivement au moteur le premier arbre primaire plein 20 portant les pignons fixes 21 et 22 des rapports impairs et le second arbre primaire creux 30 qui portent les pignons fixes 31 et 32 des rapports pairs. En outre, tous les pignons fous peuvent être sélectivement liés aux arbres secondaires qui les portent par des dispositifs de crabotage simple ou double. Ainsi les pignons fous 81, 82, 84 et 86 peuvent être liés sélectivement au premier arbre secondaire 50 et les pignons fous 83, 85 et 87 peuvent être sélectivement liés au second arbre secondaire 60.

Un premier dispositif de crabotage double 100 permet de lier sélectivement en rotation à l'arbre secondaire 50 le pignon fou 81 pour obtenir le rapport de première ou le pignon fou 82 pour obtenir le rapport de cinquième.

Un second dispositif de crabotage double 101 permet de lier en rotation à l'arbre secondaire 50 le pignon fou 84 pour obtenir le rapport de sixième ou le pignon fou 86 pour obtenir le rapport de deuxième.

Un troisième dispositif de crabotage double 102 permet de lier sélectivement en rotation à l'arbre secondaire 60 le pignon fou 85 pour obtenir le rapport de quatrième ou le pignon fou 87 pour obtenir le rapport de marche arrière.

Enfin, un crabot simple 103 permet de lier sélectivement en rotation à l'arbre secondaire 60 le pignon fou 83 pour obtenir le rapport de troisième.

Les figures 3 à 9 illustrent le cheminement du couple du moteur à la couronne de pont selon chaque rapport engagé.

En marche arrière (figure 3), le couple est transmis du moteur à l'arbre primaire 30 par l'embrayage 41 fermé, puis du pignon fixe 32 au pignon premier pignon intermédiaire de marche arrière 92, puis à l'axe intermédiaire de marche arrière 90, puis au second pignon intermédiaire de marche arrière 91, au pignon fou 87 de marche arrière, puis du pignon fou 87 à l'arbre secondaire 60 par le crabot double 102 en position craboté sur le pignon 87, puis de l'arbre secondaire 60 à la roue dentée 62 qui transmet le mouvement, par l'intermédiaire de la chaîne 75, à la roue dentée 52, puis à l'arbre secondaire 50 qui le transmet, par l'intermédiaire du pignon d'attaque 51 à la couronne 70.

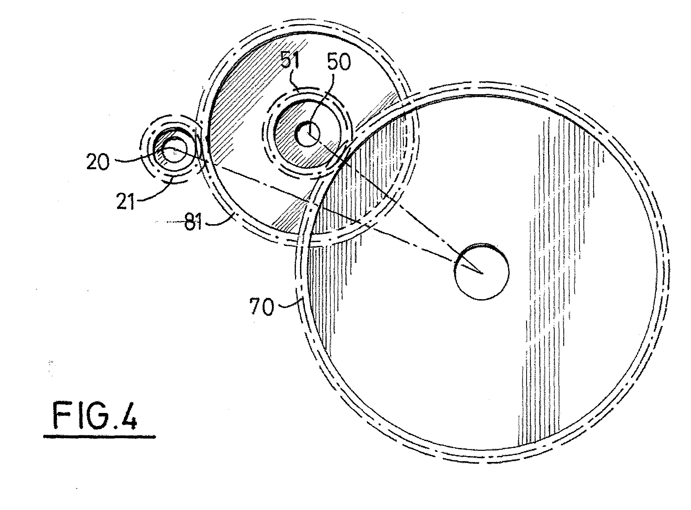

En première (figure 4), le couple est transmis du moteur à l'arbre primaire 20 par l'embrayage 40 fermé, puis du pignon fixe 21 au pignon fou 81, puis du pignon fou 81 à l'arbre secondaire 50 par le crabot double 100 en position craboté sur le pignon 81, puis de l'arbre secondaire 50 au pignon fixe 51 qui le transmet à la couronne 70.

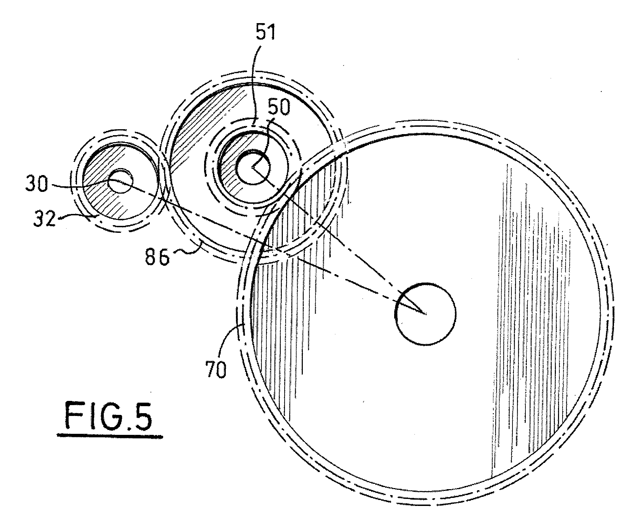

En deuxième (figure 5), le couple est transmis du moteur à l'arbre primaire 30 par l'embrayage 41 fermé, puis du pignon fixe 32 au pignon fou 86, puis du pignon fou 86 à l'arbre secondaire 50 par le crabot double 101 en position craboté sur le pignon 86, puis de l'arbre secondaire 50 au pignon fixe 51 qui le transmet à la couronne 70.

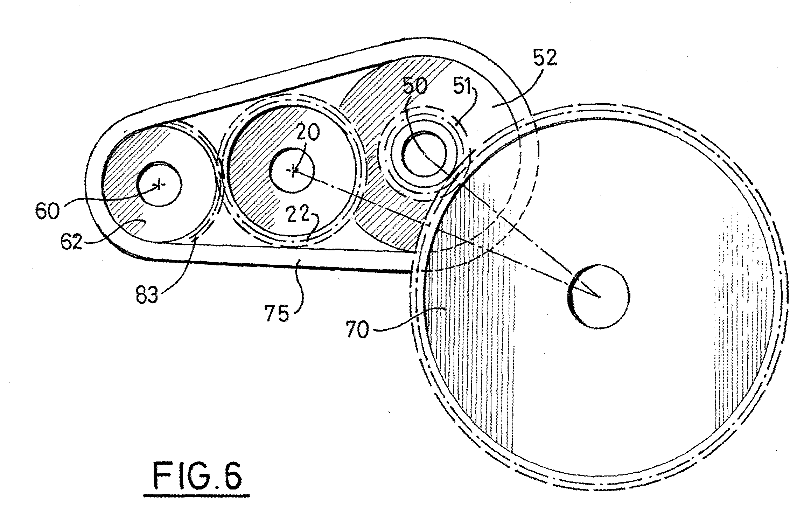

En troisième (figure 6), le couple est transmis du moteur à l'arbre primaire 20 par l'embrayage 40 fermé, puis du pignon fixe 22 au pignon fou 83, puis du pignon fou 83 à l'arbre secondaire 60 par le crabot simple 103 en position craboté sur le pignon 83, puis de l'arbre secondaire 60 à la roue dentée 62 qui transmet le mouvement, par l'intermédiaire de la chaîne 75, à la roue dentée 52, puis à l'arbre secondaire 50 qui le transmet, par l'intermédiaire du pignon d'attaque 51 à la couronne 70.

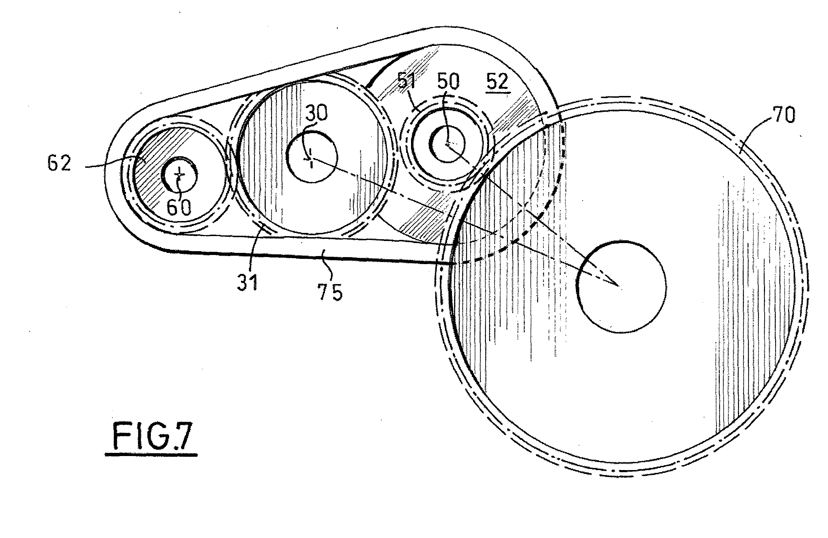

En quatrième (figure 7), le couple est transmis du moteur à l'arbre primaire 30 par l'embrayage 41 fermé, puis du pignon fixe 31 au pignon fou 85, puis du pignon fou 85 à l'arbre secondaire 60 par le crabot simple 102 en position craboté sur le pignon 85, puis de l'arbre secondaire 60 à la roue dentée 62 qui transmet le mouvement, par l'intermédiaire de la chaîne 75, à la roue dentée 52, puis à l'arbre secondaire 50 qui le transmet, par l'intermédiaire du pignon d'attaque 51 à la couronne 70.

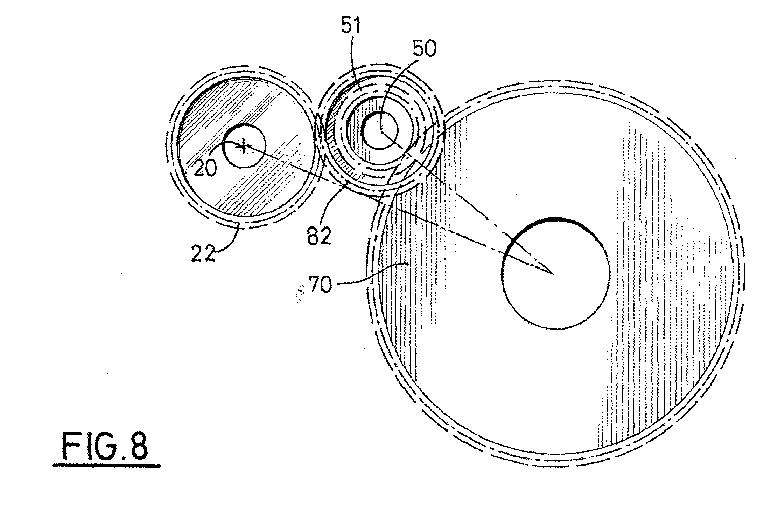

En cinquième (figure 8),le couple est transmis du moteur à l'arbre primaire 20 par l'embrayage 40 fermé, puis du pignon fixe 22 au pignon fou 82, puis du pignon fou 82 à l'arbre secondaire 50 par le crabot simple 100 en position craboté sur le pignon 82, puis de l'arbre secondaire 50 au pignon fixe 51 qui le transmet à la couronne 70.

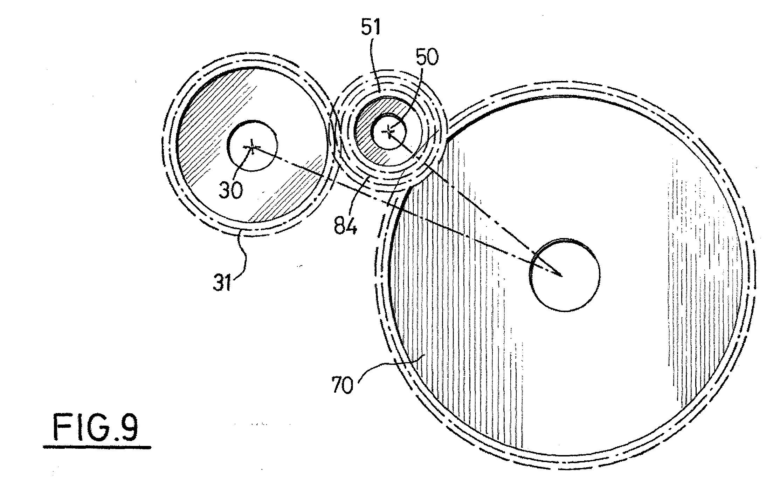

Enfin, en sixième (figure 9), le couple est transmis du moteur à l'arbre primaire 30 par l'embrayage 41 fermé, puis du pignon fixe 31 au pignon fou 84, puis du pignon fou 84 à l'arbre secondaire 50 par le crabot double 101 en position craboté sur le pignon 84, puis de l'arbre secondaire 50 au pignon fixe 51 qui le transmet à la couronne 70.

## Revendications

1. Boîte de vitesses (10) à arbres parallèles et à engrenages comportant un arbre primaire plein (20) et un arbre primaire creux (30) concentriques portant chacun au moins deux dentures fixes (21, 22) et (31, 32), ainsi que deux arbres secondaires (50, 60) portant des pignons fous (81, 82, 83, 84, 85, 86, 87) **caractérisée en ce que** le premier arbre secondaire (50) est muni d'un pignon d'attaque (51) d'une couronne de pont (70) et **en ce que** le deuxième arbre secondaire (60) est relié à la couronne de pont (70) par l'intermédiaire d'un organe flexible (75)

2. Boîte de vitesses selon la revendication 1, **caractérisée en ce que** l'organe flexible (75) est une chaîne.

3. Boîte de vitesses (10) selon la revendication 2, **caractérisée en ce** la chaîne (75) relie deux roues dentées (52, 62) portées respectivement par le premier et par le deuxième arbre secondaire (50, 60).

4. Boîte de vitesses (10) selon la revendication 1, 2 ou 3, **caractérisée en ce que** le premier arbre secondaire (50) est disposé au-dessus du plan défini par les axes respectifs des arbres primaires (20, 30) et de la couronne du pont (70).

5. Boîte de vitesses (10) selon l'une des revendications précédentes, **caractérisée en ce que** les deux arbres secondaires (50, 60) sont sensiblement symétriques par rapport à l'axe des arbres primaires (20, 30).

6. Boîte de vitesses (10) selon l'une des revendications précédentes, **caractérisée en ce que** l'arbre primaire plein (20) porte deux dentures fixes (21, 22) engrenant respectivement avec un seul pignon fou (81) porté par l'arbre secondaire (50) et avec deux pignons fous (82, 83) portés respectivement par les arbres secondaires (50, 60).

7. Boîte de vitesses selon l'une des revendications précédentes, **caractérisé en ce que** l'arbre primaire creux (30) porte deux dentures fixes (31) engrenant respectivement avec deux pignons fous (84, 85) portés respectivement par les arbres secondaires (50, 60), et avec un pignon fou (86) porté par l'arbre secondaire (50) et un pignon fixe (92) porté par un axe intermédiaire (90).

8. Boîte de vitesses (10) selon la revendication 6, **caractérisée en ce qu'**une denture fixe (22) de l'arbre plein (20) engrène avec un pignon fou (82) porté par l'arbre secondaire (50) et avec un pignon fou (83) porté par l'arbre secondaire (60), pour constituer respectivement les rapports de cinquième et de troisième.

9. Boîte de vitesses selon la revendication 7, **caractérisée en ce qu'**une denture fixe (31) de l'arbre primaire creux (30) engrène avec un pignon fou (84) porté par l'arbre secondaire (50) et avec un pignon fou (85) porté par l'arbre secondaire (60) pour constituer respectivement les rapports de sixième et de quatrième.

10. Boîte de vitesses (10) selon l'une des revendications 3 à 9, **caractérisée en ce que** le rapport du nombre de dents des deux roues dentées (52, 62) reliées par la chaîne (75) correspond au ratio du rapport de troisième sur le rapport de cinquième et du rapport de quatrième sur le rapport de sixième.

11. Boîte de vitesses (10) selon l'une quelconque des revendications précédentes **caractérisée en ce que** les ratios du rapport de troisième sur le rapport de quatrième, du rapport de quatrième sur le rapport de cinquième et du rapport de cinquième sur le rapport de sixième sont égaux ou sensiblement égaux.

12. Boîte de vitesses (10) selon l'une des revendications précédentes, **caractérisée en ce que** le pignon fou de marche arrière (87) engrène avec un pignon fixe intermédiaire (91), que ces deux pignons sont disposés dans la même tranche axiale que le pignon d'attaque (51), et **en ce que** l'encombrement axial de ces deux pignons ne dépasse pas celui du pignon d'attaque (51) de la couronne (70).
